# EUROPÄISCHE PATENTANMELDUNG

(11) **EP 4 160 457 A1**
(43) Veröffentlichungstag der Anmeldung: **05.04.2023**
(21) Anmeldenummer: 21200100.2
(22) Anmeldetag: 30.09.2021
(51) Int. Cl.: G06F 21/60

(54) **VERSCHLÜSSELUNG VON PROGRAMMANWEISUNGEN AUF EINER NUMERISCHEN STEUEREINRICHTUNG**

(71) Anmelder: Siemens Aktiengesellschaft, 80333 München (DE)
(72) Erfinder: Bretschneider, Jochen, 88696 Owingen (DE); Immenroth, Lars, 08060 Zwickau (DE); Vieweg, André, 09112 Chemnitz (DE)
(74) Vertreter: Siemens Patent Attorneys

(57) **Zusammenfassung**

Die Erfindung betrifft ein Verfahren zum Betrieb einer numerischen Steuereinrichtung zum Steuern einer Fertigungsmaschine zur Fertigung eines Werkstücks mit folgenden Schritten: Bereitstellen von Werkstückdaten; Bereitstellen einer CAM-Software; Erzeugen von Programmanweisungen (3) zur Fertigung des Werkstücks mittels der Fertigungsmaschine, wobei die Programmanweisungen (3) mittels der CAM-Software oder mittels einer der CAM-Software nachgeordneten Post-Prozessor-Software in Abhängigkeit der Werkstückdaten erzeugt werden; Verschlüsseln der Programmanweisungen (3) mit einem ersten Verschlüsselungsschlüssel (5) zum Erzeugen erster verschlüsselter Programmanweisungen (7); Entschlüsseln der ersten verschlüsselten Programmanweisungen (7) mit einem ersten Entschlüsselungsschlüssel (6) durch die numerische Steuereinrichtung zum Erzeugen erster entschlüsselter Programmanweisungen.

Um einem OEM-Kunden die Möglichkeit zu geben, von ihm erzeugte Programmanweisungen vor unberechtigten Zugriff zu schützen, und gleichzeitig dafür Sorge zu tragen, dass daraus kein erhöhtes Sicherheits-Risiko für den Steuerungs-Hersteller erwächst, sieht die Erfindung vor, dass die ersten entschlüsselten Programmanweisungen mit einem zweiten Verschlüsselungsschlüssel (13) zum Erzeugen zweiter verschlüsselter Programmanweisungen (15) verschlüsselt und in einem Speicher der numerischen Steuereinrichtung abgelegt werden. Anschließend werden die zweiten verschlüsselten Programmanweisungen (15) aus dem Speicher ausgelesen, zum Erzeugen zweiter entschlüsselter Programmanweisungen (17) entschlüsselt und durch die numerische Steuereinrichtung abgearbeitet zur Steuerung der Fertigungsmaschine zur Fertigung des Werkstücks.

Die Erfindung bietet den Vorteil, dass damit beliebige Verschlüsselungsmechanismen des OEM-Kunden über einen Krypto-Koppler an eine numerische Steuereinrichtung angebunden werden können.

## Beschreibung

Die Erfindung betrifft ein Verfahren zum Betrieb einer numerischen Steuereinrichtung zum Steuern einer Fertigungsmaschine zur Fertigung eines Werkstücks mit folgenden Schritten:
- Bereitstellen von Werkstückdaten,
- Bereitstellen einer CAM-Software,
- Erzeugen von Programmanweisungen zur Fertigung des Werkstücks mittels der Fertigungsmaschine, wobei die Programmanweisungen mittels der CAM-Software oder mittels einer der CAM-Software nachgeordneten Post-Prozessor-Software in Abhängigkeit der Werkstückdaten erzeugt werden,
- Verschlüsseln der Programmanweisungen mit einem ersten Verschlüsselungsschlüssel zum Erzeugen erster verschlüsselter Programmanweisungen,
- Entschlüsseln der ersten verschlüsselten Programmanweisungen mit einem ersten Entschlüsselungsschlüssel durch die numerische Steuereinrichtung zum Erzeugen erster entschlüsselter Programmanweisungen.

Ferner betrifft die Erfindung eine numerischen Steuereinrichtung zur Durchführung des Verfahrens.

Weiterhin betrifft die Erfindung ein Fertigungsmaschinensystem, umfassend eine numerische Steuereinrichtung zur Durchführung des Verfahrens sowie eine mit der numerischen Steuereinrichtung verbundene Fertigungsmaschine.

In der Regel beginnt der Herstellungsprozess eines zu fertigenden Werkstücks mit der Modellierung des Werkstücks auf einem CAD-System (Computer Aided Design). Die mit Hilfe des CAD-Systems solchermaßen bestimmten Geometriedaten des zu fertigenden Werkstücks werden als Eingangsgröße an ein CAM-System (Computer Aided Manufacturing) weitergeleitet. Mit Hilfe des CAM-Systems werden aus den Geometriedaten des zu fertigenden Werkstücks und der späteren Konfiguration der Fertigungsmaschine, sowie ggf. den Geometriedaten eines Rohteils, dass das Ausgangsteil für den Fertigungsvorgang später an der Fertigungsmaschine bildet, die Bahnen für ein Werkzeug ermittelt, entlang derer sich das Werkzeug relativ zu dem Werkstück während des Herstellungsprozesses bewegt. Beispielsweise werden für einer Fräsbearbeitung die Fräsbahnen ermittelt, die zur Herstellung des aus dem Rohteil zu fertigenden Werkstücks von einer Fräsmaschine abzufahren sind.

Solchermaßen werden die Bewegungen eines oder mehrerer Werkzeuge, die zur Herstellung des Werkstücks notwendig sind, von dem CAM-System bestimmt und als Eingangsgröße einem sogenannten Post-Prozessor zur Verfügung gestellt.

Dabei sind im Zusammenhang mit der Erfindung mögliche Fertigungsverfahren nicht auf materialabhebende Verfahren (Fräsen, Drehen, Bohren, Schleifen etc), beschränkt, sondern es sind ebenso materialauftragende Fertigungsverfahren (3D-Druck, Schweißen etc.) umfasst.

So vielfältig wie die Fertigungsverfahren sind dementsprechend auch die dafür verwendeten Fertigungsmaschinen. So kommen für die Fertigung Produktionsmaschinen, Werkzeugmaschinen, 3D-Druck-Maschinen, Roboter usw. in Betracht.

Der Post-Prozessor, der gewöhnlich in Form eines Programms, das auf einem Rechner abläuft, vorliegt, erzeugt aus den von dem CAM-System ermittelten Bewegungsbahnen und der Konfiguration der konkreten Fertigungsmaschine, mit der die Fertigung erfolgen soll, das Steuerprogramm für diese konkrete Fertigungsmaschine.

Bei einer Fertigungsmaschine in Form einer Werkzeugmaschine werden üblicherweise die numerische Steuereinrichtung als CNC-Steuerung (Computerized Numerical Control) oder numerisehe Steuerung und das Steuerprogramm auch als Teileprogramm, NC-Teileprogramm oder NC-Programm bezeichnet.

Mittels der CNC-Steuerung wird in Verbindung mit dem entsprechenden Teileprogramm auf der betreffenden Werkzeugmaschine aus dem Rohteil schließlich das gewünschte Werkstück gefertigt. Hierfür setzt die CNC-Steuerung die in dem Teileprogramm hinterlegten Bewegungsbahnen in interpolierte Bewegungen der einzelnen Maschinenachsen um, sodass das Werkzeug in der gewünschten Weise relativ zu dem Werkstück bewegt wird.

Das Steuerprogramm bzw. Teileprogramm liegt dabei üblicherweise in Form einer Datei vor, die in ASCII-Code zeilenweise hintereinander in DIN-Code geschriebene Programmanweisungen (Befehle), insbesondere den sogenannten G-Code enthält. Ein solcher Befehl (z.B. G3 X115 Y113.3 I-43 J25.52), auch Satz genannt, kann z.B. darin bestehen, ein Werkzeug, z.B. einen Fräser, entlang eines Kreisbahnabschnitts zu einer Ziellage zu bewegen, um aus dem Rohteil z.B. eine Aussparung auszufräsen. Die einzelnen Befehle des Teileprogramms werden später von der numerischen Steuereinrichtung der Werkzeugmaschine eingelesen. Die numerische Steuereinrichtung berechnet entsprechend den Befehlen des Teileprogramms Lagesollwerte X_{soll_n} für jeden Antrieb n des Antriebssystems der Werkzeugmaschine und weist sie den Antrieben entsprechend an. Eine ebenfalls von der numerischen Steuereinrichtung umfasste Reglereinrichtung sorgt dafür, dass sich die ermittelten Lagesollwerte X_{soll_n} der einzelnen Antriebe (Achsen) auch entsprechend einstellen.

Die oben beschriebene Vorgehensweise und die dafür notwendigen Komponenten sind beispielsweise aus der EP 2058717 A1 bekannt.

Es gibt einen Trend, komplexe Fertigungsaufgaben, die bisher nur mit eigenständigen (externen) CAD/CAM-Werkzeugen gelöst wurden, in die CNC-Steuerung für eine Werkzeugmaschine zu verlagern. Das CAD-/CAM-System ist damit in die CNC-Steuerung integriert bzw. von der CNC-Steuerung mit umfasst. Die CAD/CAM-Software generiert dann das Teileprogramm zur Steuerung der betreffenden Werkzeugmaschine direkt auf der mit der Werkzeugmaschine verbundenen CNC-Steuerung, auf der es anschließend auch abgebarbeitet wird.

So ist aus der WO 2016086344 A1 bekannt, dass die CAD-Daten direkt in die CNC-Steuerung eingegeben werden können und eine auf der CNC-Steuerung bereitgestellte CAM-Software daraus ein Teileprogramm direkt auf dieser CNC-Steuerung generiert.

Aus der EP 2620826 A1 ist ferner bekannt, dass ein Teileprogramm zum Schutz vor unberechtigtem Zugriff in verschlüsselter Form zwischen einem externen CAM-System und einer CNC-Steuerung übertragen werden kann.

Aus der Patentanmeldung der Anmelderin mit dem amtlichen Anmelde-Aktenzeichen EP 21179270.0 geht ein Verfahren zum Betrieb einer numerischen Steuereinrichtung zum Steuern einer Fertigungsmaschine zur Fertigung eines Werkstücks mit folgenden Schritten hervor:
- Bereitstellen von Werkstückdaten auf der numerischen Steuereinrichtung,
- Bereitstellen einer CAM-Software auf der numerischen Steuereinrichtung,
- Erzeugen von Programmanweisungen zur Fertigung des Werkstücks mittels der Fertigungsmaschine, wobei die Programmanweisungen mittels der CAM-Software in Abhängigkeit der Werkstückdaten erzeugt werden,
- Verschlüsseln der Programmanweisungen und speichern der verschlüsselten Programmanweisungen in einem nichtflüchtigen Speicher der numerischen Steuereinrichtung,
- Auslesen der verschlüsselten Programmanweisungen aus dem nichtflüchtigen Speicher, entschlüsseln der verschlüsselten Programmanweisungen und abarbeiten der entschlüsselten Programmanweisungen durch die numerische Steuereinrichtung zur Steuerung der Fertigungsmaschine zur Fertigung des Werkstücks.

Nachteilig bei dem zuletzt genannten Verfahren ist aus Sicht des Herstellers der numerischen Steuereinrichtung (nachfolgend auch "Steuerungs-Hersteller" genannt), dass sich daraus für ihn ein Sicherheits-Risiko ergeben könnte.

Möchte beispielsweise ein OEM-Hersteller (Original Equipment Manufacturer) eine CAM-Software auf der numerischen Steuereinrichtung installieren und damit Programmanweisungen für ein bestimmtes, zu fertigendes Bauteil erzeugen und diese mittels Verschlüsselung vor unberechtigtem Zugriff schützen, so ist dafür eine entsprechende Ver- und Entschlüsselungs-Software auf der numerischen Steuereinrichtung erforderlich. Besonders wirksam wird die Verschlüsselung dann, wenn die Entschlüsselung in einem NCK (Numerical Control Kernel) der numerischen Steuereinrichtung erfolgt und die entschlüsselten Programmanweisungen dabei lediglich kurzzeitig in einem flüchtigen Speicher des NCK vorliegen. Dies bedingt jedoch, dass der OEM auf eine Entschlüsselungs-Software des Steuerungs-Herstellers zurückgreift oder der Steuerungs-Hersteller es zulässt, dass eine Entschlüsselungs-Software des OEM in dem NCK, und damit in einem höchst sensiblen Bereich der numerischen Steuereinrichtung, gespeichert wird.

Eine Aufgabe der vorliegenden Erfindung ist es, von einem Benutzer einer numerische Steuereinrichtung erzeugte Programmanweisungen für die numerische Steuereinrichtung, insbesondere ein Teileprogramm für eine CNC-Steuerung, vor unberechtigtem Zugriff zu schützen, ohne dass daraus ein Sicherheits-Risiko für den Steuerungs-Hersteller resultiert.

Die Lösung dieser Aufgabe gelingt durch ein Verfahren gemäß Anspruch 1, d.h. ein Verfahren zum Betrieb einer numerischen Steuereinrichtung zum Steuern einer Fertigungsmaschine zur Fertigung eines Werkstücks mit folgenden Schritten:
- Bereitstellen von Werkstückdaten,
- Bereitstellen einer CAM-Software,
- Erzeugen von Programmanweisungen zur Fertigung des Werkstücks mittels der Fertigungsmaschine, wobei die Programmanweisungen mittels der CAM-Software oder mittels einer der CAM-Software nachgeordneten Post-Prozessor-Software in Abhängigkeit der Werkstückdaten erzeugt werden,
- Verschlüsseln der Programmanweisungen mit einem ersten Verschlüsselungsschlüssel zum Erzeugen erster verschlüsselter Programmanweisungen,
- Entschlüsseln der ersten verschlüsselten Programmanweisungen mit einem ersten Entschlüsselungsschlüssel durch die numerische Steuereinrichtung zum Erzeugen erster entschlüsselter Programmanweisungen,
- Verschlüsseln der entschlüsselten Programmanweisungen mit einem zweiten Verschlüsselungsschlüssel zum Erzeugen zweiter verschlüsselter Programmanweisungen und Speichern der zweiten verschlüsselten Programmanweisungen in einem Speicher der numerischen Steuereinrichtung;
- Auslesen der zweiten verschlüsselten Programmanweisungen aus dem Speicher, entschlüsseln der zweiten verschlüsselten Programmanweisungen zum Erzeugen zweiter entschlüsselter Programmanweisungen und abarbeiten der zweiten entschlüsselten Programmanweisungen durch die numerische Steuereinrichtung zur Steuerung der Fertigungsmaschine zur Fertigung des Werkstücks.

Die oben genannte Aufgabe wird ferner gelöst durch eine numerische Steuereinrichtung, welche ein ebenfalls oben genanntes Verfahren ausführt.

Weiterhin wird die oben genannte Aufgabe gelöst durch ein Fertigungsmaschinensystem, umfassend eine derartige numerische Steuereinrichtung und eine davon gesteuerte Fertigungsmaschine.

Die Erfindung bietet den Vorteil, dass der Benutzer der numerischen Steuereinrichtung, z.B. ein OEM, seine Software zum Ver- und Entschlüsseln der von ihm erzeugten Programme verwenden kann und der Steuerungs-Hersteller hierfür keine Software des Benutzers in dem NCK der numerischen Steuereinrichtung installieren muss.

Vielmehr verwendet sowohl der Benutzer als auch der Hersteller der numerischen Steuereinrichtung seine eigene Kryptografie-Software zum Ver- und Entschlüsseln von Daten.

Die Schnittstelle zwischen diesen beiden Kryptografie-Anwendungen bildet vorteilhaft ein Krypto-Koppler, der die verschlüsselten Daten (Programmanweisungen) des Benutzers entschlüsseln und unmittelbar daran anschließend die Daten mittels der Verschlüsselungs-Software des Steuerungs-Herstellers wieder verschlüsseln kann.

Als Krypto-Koppler wird dabei allgemein eine Einrichtung verstanden, die sowohl in Hardware als auch in Software realisiert sein kann und die verschiedene Verschlüsselungsverfahren ineinander umsetzt. Diese verschiedenen Verfahren können sich im verwendeten Algorithmus, im Format der resultierenden verschlüsselten Dateien oder eben nur durch unterschiedliche Schlüssel unterscheiden.

Ein Krypto-Koppler kann auch als Adapter bezeichnet werden. Ein Adapter kann von einem System Information in ein anderes System überführen. Als Beispiel seien hier Buskoppler genannt, die verschiedene Bussysteme koppeln. Diese Idee wird hier analog auf eine kryptografische Anwendung übertragen.

Der Krypto-Koppler ist nicht zwingend darauf angewiesen, ein persistent abgelegtes verschlüsseltes Programm eines Formates in ein anderes Format durch die Nutzung von kryptografischen Funktionen umzusetzen. Es ist ebenfalls möglich, dass ein kryptographisch gesicherter Datenstrom kontinuierlich an den Krypto-Koppler gesendet wird. Der Krypto-Koppler kann diesen Datenstrom dekodieren bzw. entschlüsseln, indem jeweils nur ein kleiner Ausschnitt dieses Datenstroms dekodiert bzw. entschlüsselt wird. Im nächsten Schritt verschlüsselt der Adapter diesen kurzzeitig unverschlüsselten Inhalt wieder in das zweite kryptografische Format.

Wie bereits genannt, können verschiedene kryptografische Verfahren zum Einsatz kommen. Es muss auch nicht zwingend mit festen Schlüsselpaaren, wie in der asymmetrischen Kryptografie üblich, gearbeitet werden. Es kann auch sein, dass für jede Verbindung mit dem Adapter individuelle Schlüssel ausgehandelt werden, analog wie das bei gesicherten Verbindungen im Netzwerkbereich üblich ist. Die jeweiligen Schlüssel sind dann nur für einen kurzen Zeitraum oder nur für die kryptografische Umsetzung bestimmter Programmanweisungen gültig.

Vorteilhaft werden die durch den CAM-Algorithmus und ggf. einen nachgeordneten Post-Prozessor erzeugten Programmanweisungen mittels eines ersten Verschlüsselungsschlüssels (des Benutzers) verschlüsselt und damit erste verschlüsselte Programmanweisungen erzeugt. Durch den Krypto-Koppler werden die ersten verschlüsselten Programmanweisungen mittels eines ersten Entschlüsselungsschlüssels, der mit dem ersten Verschlüsselungsschlüssel übereinstimmen kann, wieder entschlüsselt zum Erzeugen erster entschlüsselter Programmanweisungen.

Vorzugsweise unmittelbar im Anschluss zu dieser Entschlüsselung werden die ersten entschlüsselten Programmanweisungen wieder verschlüsselt, und zwar unter Anwendung des zweiten Verschlüsselungsschlüssels, womit zweite verschlüsselte Programmanweisungen entstehen.

Der Krypto-Koppler ist vorzugsweise so organisiert, dass die entschlüsselten Programmanweisungen allenfalls in einem dem Krypto-Koppler zugeordneten, flüchtigen Speicher und allenfalls nur für kurze Zeit zwischengespeichert werden. Insbesondere werden entschlüsselte Programmanweisungen - nach deren erneuter Verschlüsselung - unmittelbar im Anschluss an die Verschlüsselung durch neue entschlüsselte Programmanweisungen überschrieben. Dadurch wird gewährleistet, dass sich entschlüsselten Programmanweisungen nie in größerem Umfang oder für längere Zeit in einem Speicher der CNC-Steuerung befinden.

Durch die unterschiedlichen Verschlüsselungen (zumindest unterschiedliche Verschlüsselungsschlüssel, ggf. auch unterschiedliche Verschlüsselungsalgorithmen bzw. -Verfahren) unterscheiden sich die ersten verschlüsselten Programmanweisungen von den zweiten verschlüsselten Programmanweisungen. Es liegen darin jedoch dieselben Programmanweisungen, lediglich in unterschiedlich verschlüsselter Form vor bzw. "verborgen".

Der Krypto-Koppler kann als Hardware-Baustein, z.B. in Form eines FPGA, ausgebildet sein. Vorzugsweise ist der Krypto-Koppler jedoch als Software-Applikation ausgebildet, die auf die Ressourcen (Prozessor, Speicher etc.) der numerischen Steuereinrichtung zugreift. Vorteilhaft ist der Krypto-Koppler dabei außerhalb des NCK implementiert. Insbesondere nutzt der Krypto-Koppler keine Speicher bzw. SpeicherBereiche, die dem NCK zugeordnet sind.

Im Zusammenhang mit der Erfindung ist es im Prinzip unerheblich, ob die Programmanweisungen außerhalb der numerischen Steuereinrichtung (mittels eines externen CAM-Systems) erzeugt, verschlüsselt und anschließend in verschlüsselter Form auf die numerische Steuereinrichtung übertragen werden oder ob die Programmanweisungen mittels einer auf der numerischen Steuereinrichtung installierten CAD-/CAM-Software direkt auf der numerischen Steuereinrichtung erzeugt und durch den Benutzer verschlüsselt werden. In beiden Fällen liegen letztendlich durch den Benutzer verschlüsselte und damit vor unberechtigtem Zugriff geschützte Programmanweisungen auf der numerischen Steuereinrichtung vor.

Durch die Verlagerung des CAM-Algorithmus auf die numerische Steuereinrichtung kann der Anwender direkt an der Bedieneinheit der Steuereinrichtung auf sich ändernde Bedingungen eingehen. Darüber hinaus hat der CAM-Algorithmus Zugriff auf Maschinenparameter der betreffenden Fertigungsmaschine, die in der numerischen Steuereinrichtung hinterlegt sind, und kann so mitunter ein optimiertes Steuerprogramm und damit ein besseres Fertigungsergebnis erzeugen. Da das Steuerprogramm für die konkret vorliegende Fertigungsmaschine erstellt wird, ist für diesen Fall auch kein Post-Prozessor erforderlich.

Bei einer Ausführungsform der Erfindung wird seitens des Benutzers lediglich ein Schlüssel zum Ver- und Entschlüsseln der Programmanweisungen verwendet (symmetrische Verschlüsselung). Der erste Verschlüsselungsschlüssel stimmt so mit dem ersten Entschlüsselungsschlüssel überein. Dies hat den Vorteil, dass nur ein Schlüssel benötigt wird, dieser jedoch sowohl von der Verschlüsselungs-Instanz als auch von der Entschlüsselungs-Instanz verwendet wird.

Alternativ ist es aber auch möglich, dass seitens des Benutzers eine asymmetrische Verschlüsselung mit einem Schlüsselpaar, in der Regel einem sog. Public Key und einem sog. Private Key, vorgesehen wird. Der erste Verschlüsselungsschlüssel und der erste Entschlüsselungsschlüssel unterscheiden sich demnach. Die verschlüsselnde Instanz kennt dabei den Schlüssel zum Entschlüsseln nicht.

Gleiches wie für den Benutzer gilt auch für den Steuerungs-Hersteller. Auch er kann, unabhängig davon, welche Wahl der Benutzer getroffen hat, für seine Ver- und Entschlüsselung sowohl eine symmetrische Verschlüsselung vorsehen - der zweite Verschlüsselungsschlüssel stimmt dann mit dem zweiten Entschlüsselungsschlüssel überein - als auch auf eine asymmetrische Verschlüsselung zurückgreifen - womit sich der zweite Verschlüsselungsschlüssel und der zweite Entschlüsselungsschlüssel unterscheiden.

Bezüglich der kryptographischen Methoden stehen somit sowohl dem Benutzer als auch dem Steuerungs-Hersteller alle gängigen Methoden (symmetrische / asymmetrische Kryptographie) offen. Eine Ausführungsform der Erfindung sieht vor, dass die Programmanweisungen einzelne Sätze oder Blöcke aus mehreren Sätzen eines Steuerprogramms zur Fertigung des Werkstücks bilden.

Sowohl bei der Verschlüsselung als auch bei der Entschlüsselung kann es vorteilhaft sein, nicht das komplette Steuerprogramm zur Fertigung des Werkstücks in einem Arbeitsgang zu verschlüsseln bzw. zu entschlüsseln. So wird das Steuerprogramm durch die CAM-Software satzweise bzw. blockweise generiert, sodass es sinnvoll ist, diese Sätze oder Blöcke bereits während ihrer Erzeugung oder zumindest unmittelbar im Anschluss daran zu verschlüsseln, damit sich zu keinem Zeitpunkt entweder das gesamte Steuerprogramm oder größere Teile davon unverschlüsselt auf der numerischen Steuereinrichtung befinden.

Ähnlich verhält es sich auch bei der Entschlüsselung des Steuerprogramms. Auch hier ist es von Vorteil, wenn die Entschlüsselung satz- bzw. blockweise erfolgt, sodass stets nur die Programmanweisungen des Steuerprogramms entschlüsselt werden, die gerade durch die numerische Steuereinrichtung abgearbeitet werden oder deren Abarbeitung unmittelbar bevorsteht.

Bei der genannten Vorgehensweise ist es nicht zwingend erforderlich, dass bei einer blockweisen Ver- und Entschlüsselung die Blöcke bei der Verschlüsselung den Blöcken bei der Entschlüsselung entsprechen. So können zum Beispiel für die Verschlüsselung und für die Entschlüsselung unterschiedliche Größen für die betreffenden Blöcke gewählt werden. Die Größe der Blöcke (auch Blocklänge genannt) lässt sich so gegebenenfalls an unterschiedliche Randbedingungen bei der Verschlüsselung bzw. bei der Entschlüsselung anpassen. Insbesondere lässt sich die Blocklänge bei der Entschlüsselung auch an Randbedingungen der numerischen Steuereinrichtung zur Abarbeitung dieser Blöcke anpassen.

Bei der Verwendung des Krypto-Kopplers gemäß der Erfindung bedeutet dies, dass die Programmanweisungen durch den Krypto-Koppler in Form eines Daten-Stroms (data stream) ent- und wieder verschlüsselt werden. Die Prozesse Ent- und Verschlüsselung können damit in dem Krypto-Koppler weitgehend zeitgleich abgearbeitet werden und es liegt damit auch zu keinem Zeitpunkt eine größere Datenmenge, z.B. ein komplettes Steuer- bzw. Teileprogramm, unverschlüsselt in einem Speicher der numerischen Steuereinrichtung vor.

Vorteilhaft werden die zweiten verschlüsselten Programmanweisungen in einem NC-Kern der numerischen Steuereinrichtung entschlüsselt. Der NC-Kern, auch NCK (Numerical Control Kernel) genannt, ist der Teil der numerischen Steuereinrichtung, der die Achsen der Werkzeugmaschine steuert. Wesentliche Komponenten des NCK sind: der Interpreter, der Interpolator sowie die Regler für Position, Geschwindigkeit und Beschleunigung der einzelnen Antriebe (Achsen) der Werkzeugmaschine. Der NCK ist bezüglich vertraulicher Daten ein sehr sensibler und daher vor äußeren Zugriffen besonders geschützter Bereich der numerischen Steuereinrichtung. Einem Benutzer der numerischen Steuereinrichtung ist es in der Regel nicht möglich, direkt auf einen Speicherbereich des NCK zuzugreifen.

Bei einer Ausführungsform der Erfindung ist die Entschlüsselung der zweiten verschlüsselten Programmanweisungen auf eine bestimmte numerischen Steuereinrichtung und/oder eine bestimmte Fertigungsmaschine und/oder für eine bestimmte Lizenz beschränkt.

Bei der praktischen Umsetzung der Erfindung erweist es sich als vorteilhaft, wenn auf der numerischen Steuereinrichtung, insbesondere im Softwarebereich des NCK, eine DRM-Bibliothek (Digital Rights Management) installiert ist, über die insbesondere die Schlüssel- und Rechte-Verwaltung organisiert wird. Dadurch ist es einfacher, die Zugriffsrechte zu verwalten und insbesondere können damit in einfacher Weise auch gleiche oder ähnliche Zugriffsrechte auf mehreren numerischen Steuereinrichtungen, z.B. innerhalb einer Fabrik, implementiert werden. Das beinhaltet, dass man an der numerischen Steuereinrichtung verschiedene Nutzer mit unterschiedlichen Rechten anlegen kann. Nicht jeder Nutzer kann oder darf die gleichen Aktionen ausführen, Dateien abarbeiten oder lesen. Ferner können Ausführungsrechte von verschlüsselten Programminhalten an eine bestimmte Maschine gebunden werden. Diesbezüglich kann man die verschlüsselten Inhalte nur noch an einer Maschine oder einem gewissen Maschinentyp ausführen. Auch ist es möglich, dass die Anzahl der Ausführungen beschränkt wird. Nach einer Anzahl von Aufrufen, kann das verschlüsselte Programm nicht mehr abgearbeitet werden.

Weiterhin kann mittels der DRM-Bibliothek auch eine zunächst erforderliche Authentifizierung eines Benutzers vorgesehen werden, bevor ein Zugriff auf die numerische Steuereinrichtung allgemein oder darin befindliche, geschützte Inhalte möglich ist.

Insbesondere kann von der DRM-Bibliothek auch die konkrete Kryptographie-Software, zumindest teilweise, umfasst sein, z.B. "OpenSSL".

Für den Steuerungs-Hersteller lässt sich dadurch das Paket "Sicherheit und Zugriffsberechtigungen" als eigenständiges, in sich geschlossenes Datenpaket leichter handhaben.

Insbesondere greift der NC-Kern erst nach einer erfolgreichen Authentifizierung, vorzugsweise unter Verwendung der DRM-Bibliothek, auf die verschlüsselten Programmanweisungen zu, entschlüsselt diese und arbeitet sie ab.

Vorteilhaft werden die aus den zweiten verschlüsselten Programmanweisungen nach der Entschlüsselung hervorgehenden, zweiten entschlüsselten Programmanweisungen lediglich in einem flüchtigen Speicher des NCK gespeichert, wodurch diese unmittelbar nach deren Abarbeitung durch neue Programmanweisungen überschrieben und somit wieder gelöscht werden. Es wäre daher allenfalls mit sehr großem Aufwand möglich, die unverschlüsselten Programmanweisungen aus dem NCK der numerischen Steuereinrichtung auszulesen.

Vorteilhaft werden die zweiten entschlüsselten Programmanweisungen bzw. die sich daraus ergebenden einzelnen Bewegungsinformationen nicht im Filesystem der Steuereinrichtung abgelegt und auch nicht auf andere Weise außerhalb des NC-Kerns sichtbar, sondern nur intern im flüchtigen Speicher des NC-Kerns verfügbar gemacht. Der NC-Kern (NCK) ist weiter in der Lage, die Bewegungsinformationen zu interpretieren und Achsbewegungen ohne funktionale Einschränkungen durchzuführen, so wie dies auch bei unverschlüsselten Steuerprogrammen der Fall ist.

Auch nicht verschlüsselte Steuerprogramme können jedoch weiterhin abgearbeitet werden.

Eine Ausführungsform der Erfindung sieht vor, dass der erste Verschlüsselungsschlüssel und erste Entschlüsselungsschlüssel gemeinsam auf Basis eines Diffie-Hellman-Schlüsselaustausches generiert werden, z.B. auf Basis des ECDH- (Elliptic-curve Diffie-Hellman-) Verfahrens (siehe z.B. https://en.wikipedia.org/wiki/Elliptic-curve_Diffie%E2%80%93Hellman). Dies hat den Vorteil, dass ein gemeinsamer (symmetrischer) Schlüssel zwischen der numerischen Steuereinrichtung und der externen Recheneinrichtung vereinbart werden kann, der nicht zwischen diesen beiden Partner übertragen werden muss und daher auch nicht "abgehört" werden kann. Weiterhin kann der symmetrische Schlüssel für jede neue Datenübertragung zwischen den Partnern (neues Teileprogramm, neue Programmanweisungen) unterschiedlich sein, ohne dass hierfür seitens der Benutzer der numerischen Steuereinrichtung oder der externen Recheneinrichtung stets neue Schlüssel bereitgestellt werden müssten. Weiterhin ergibt sich ein Geschwindigkeitsvorteil, den die symmetrische Verschlüsselung gegenüber der asymmetrischen Verschlüsselung bietet.

Die Erfindung wird nachfolgend anhand von Ausführungsbeispielen exemplarisch näher beschrieben und erläutert. Dabei zeigen:
- FIG 1: eine erste Ausführungsform der Erfindung,
- FIG 2: eine zweite Ausführungsform der Erfindung,
- FIG 3: Verfahrensschritte bei der Durchführung eines erfindungsgemäßen Verfahrens.

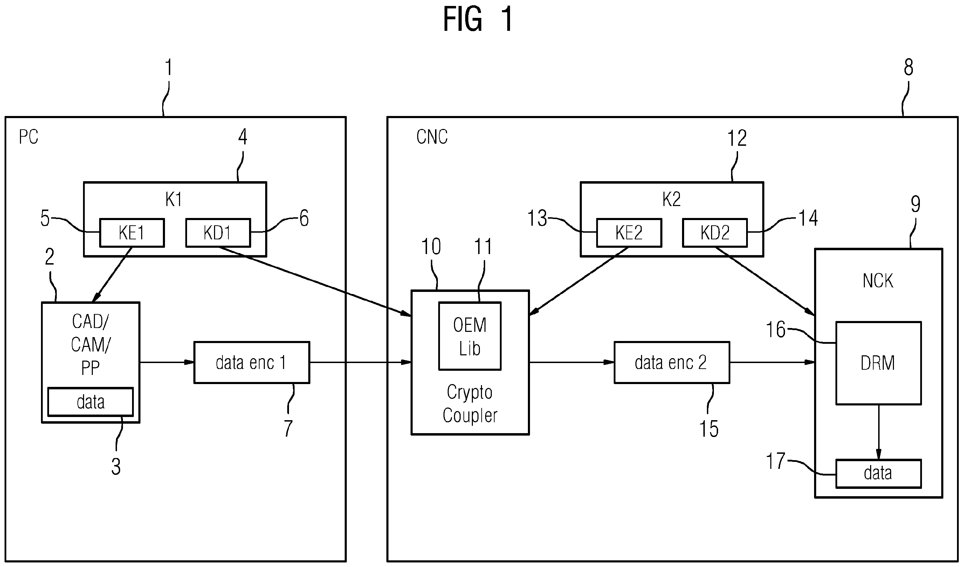

FIG 1 zeigt ein erstes Ausführungsbeispiel der Erfindung, bei dem Programmanweisungen, insbesondere Sätze eines Teileprogramms, die in Summe ein Teileprogramm ergeben, mittels einer externen Recheneinrichtung, z.B. einem PC 1, außerhalb einer numerischen Steuereinrichtung in Form einer CNC-Steuerung 8 erzeugt werden.

Die Erzeugung derartiger Programmanweisungen mittels eines dafür eingerichteten CAD-CAM-PP-Systems, das mehrere Rechner und mehrere darauf ausführbare Software-Applikationen umfassen kann, aber auch nur einen einzelnen Rechner mit einer oder mehreren darauf ablaufenden Software-Applikationen aufweisen kann, ist aus dem Stand der Technik hinlänglich bekannt. In Kürze gestaltet sich der Prozess wie folgt:
Zunächst werden mittels eines CAD-Systems, insbesondere einer auf einem Computer (Rechner) installierten CAD-Applikation, die Geometriedaten eines zu fertigenden Werkstücks festgelegt.

Anschließend werden die so erzeugten CAD-Daten einem CAM-System, insbesondere einer auf einem Computer installierten CAM-Applikation, zugeführt.

Mit Hilfe des CAM-Systems werden aus den Geometriedaten des zu fertigenden Werkstücks, sowie ggf. den Geometriedaten eines Rohteils, die Bahnen für ein Werkzeug ermittelt, entlang derer sich das Werkzeug relativ zu dem Werkstück während des Herstellungsprozesses des Werkstücks bewegt.

Anschließend werden die Ausgangsdaten des CAM-Systems einem Post-Prozessor-System (PP), insbesondere einer auf einem Computer installierten Post-Prozessor-Applikation, zugeführt.

Der Post-Prozessor erzeugt aus den von dem CAM-System ermittelten Bewegungsbahnen und der Konfiguration der konkreten Fertigungsmaschine, mit der die Fertigung erfolgen soll, sowie der konkret verwendeten CNC-Steuerung das Steuerprogramm (Teileprogramm) für diese konkrete Fertigungsmaschine mit der damit verbundenen, konkreten CNC-Steuerung.

Durch die Ausführung des Teileprogramms wird mittels der davon umfassten Programmanweisungen Schritt für Schritt aus dem Rohteil das zu fertigende Werkstück hergestellt.

Im Ausführungsbeispiel sind die drei genannten Software-Applikationen (Apps) CAD-App, CAM-App und PP-App der Übersichtlichkeit halber in einer gemeinsamen Software-Applikation 2 "CAD/CAM/PP" zusammengefasst. In der Regel werden diese Applikationen jedoch als getrennte Applikationen, die ggf. sogar von unterschiedlichen Software-Providern stammen, vorliegen. Ferner laufen diese Software-Applikationen im Ausführungsbeispiel wegen der besseren Übersichtlichkeit gemeinsam auf dem PC 1. Ebenso können die unterschiedlichen Software-Applikationen auf unterschiedlichen Rechnern ablaufen.

Das Resultat des CAD-CAM-PP-Prozesses liegt schließlich das von einer konkreten CNC-Steuerung an einer konkreten Werkzeugmaschine ausführbare Teileprogramm mit den darin enthaltenen Programmanweisungen 3 "data" vor.

Das gesamte Teileprogramm und insbesondere die darin enthaltenen Programmanweisungen 3 werden von dem Erzeuger dieser Daten in der Regel als vertraulich betrachtet, die vor unbefugtem Zugriff geschützt werden sollen. Daher umfasst der PC 1 gemäß dem Ausführungsbeispiel eine Verschlüsselungs-Software 4 mit einem Schlüssel K1, insbesondere einem "Public Key" KE1 zum Verschlüsseln (encrypt) und einem "Private Key" KD1 zum Entschlüsseln (decrypt) der Daten. Die Verschlüsselungs-Software führt demnach im Ausführungsbeispiel eine asymmetrische Verschlüsselung aus, bei der zum Verschlüsseln und Entschlüsseln unterschiedliche Schlüssel verwendet werden. Der erste Verschlüsselungsschlüssel 5 (KE1) unterscheidet sich demnach von dem ersten Entschlüsselungsschlüssel 6 (KD1).

Im Ausführungsbeispiel werden die seitens des Benutzers des PC 1 erzeugten Daten 3 (data) mittels der Verschlüsselungs-Software 4 unter Verwendung des Verschlüsselungsschlüssels 5 (KE1) verschlüsselt, woraus die ersten verschlüsselten Programmanweisungen (Daten) 7 (data enc 1) resultieren.

Die ersten verschlüsselten Programmanweisungen (Daten) 7 (data enc 1) sind somit vor unberechtigtem Zugriff geschützt und können so ohne Bedenken gespeichert oder über ein Netzwerk übertragen werden.

Im Ausführungsbeispiel werden die ersten verschlüsselten Programmanweisungen (Daten) 7 (data enc 1) der CNC-Steuerung 8 zugeführt, z.B. über ein Netzwerk übertragen, mittels der die in den Daten in verschlüsselter Form enthaltenen Programmanweisungen ausgeführt werden zur Bearbeitung eines Werkstücks mittels einer mit der CNC-Steuerung verbundenen Werkzeugmaschine (nicht dargestellt).

Als Besonderheit umfasst die CNC-Steuerung 8 einen Krypto-Koppler 10 (Crypto Coupler), der in der Lage ist, die mittels des ersten Verschlüsselungsschlüssels 5 verschlüsselten, ersten verschlüsselten Programmanweisungen 7 mittels des ersten Entschlüsselungsschlüssels 6 zu entschlüsseln und die so erzeugten, ersten entschlüsselten Programmanweisungen unmittelbar im Anschluss an die Entschlüsselung mittels eines zweiten Verschlüsselungsschlüssel 13 (KE2) wieder zu verschlüsseln und damit zweite verschlüsselte Programmanweisungen (Daten) 15 (data enc 2) zu erzeugen. Vorteilhaft werden die zweiten verschlüsselten Programmanweisungen 15 in einem dafür geeigneten und vorgesehenen Speicher (nicht dargestellt) der CNC-Steuerung 8 gespeichert.

Bei Bedarf können die zweiten verschlüsselten Programmanweisungen 15 dann dem NCK 9 der CNC 8 zugeführt werden zur Bearbeitung eines Werkstücks gemäß den in den zweiten verschlüsselten Programmanweisungen 15 enthaltenen Bewegungsinformationen.

Damit der NCK 9 die zweiten verschlüsselten Programmanweisungen 15 abarbeiten kann, müssen diese jedoch zunächst wieder entschlüsselt werden. Hierfür ist ein zweiter Entschlüsselungsschlüssel 14 (KD2) vorhanden, mittels dem die zweiten verschlüsselten Programmanweisungen 15 wieder entschlüsselt werden können, so dass zweite entschlüsselte Programmanweisungen 17 und damit letztendlich die ursprünglich mittels des PC 1 erzeugten Programmanweisungen 3 wieder als "lesbare" Programmanweisungen, und zwar in Form der zweiten entschlüsselten Programmanweisungen 17 (data) in unverschlüsselter Form vorliegen und von dem NCK 9 abgearbeitet werden können.

Die von der CNC-Steuerung abarbeitbaren zweiten entschlüsselten Programmanweisungen 17 stimmen demnach mit den kurzeitig im Krypto-Koppler 10 vorliegenden ersten entschlüsselten Programmanweisungen sowie den ursprünglich mittels des CAD/CAM/PP-Systems 2 erzeugten Programmanweisungen 3 überein.

Im Ausführungsbeispiel liegt sowohl der PC-seitig verwendete Schlüssel 4 (K1) als auch der CNC-seitig verwendete Schlüssel 12 (K2) in Form eines Schlüsselpaares 5, 6 (KE1, KD1) bzw. 13, 14 (KE1, KD1) vor. Damit werden zwei asymmetrische kryptographische Verfahren angewendet, die beispielsweise aus der Ver- und Entschlüsselung unter Verwendung eines "Public Key" und eines "Private Key" bekannt sind.

Ebenso wäre es möglich, bei dem Schlüssel 4 (K1) und/oder dem Schlüssel 12 (K2) jeweils einen gemeinsamen Schlüssel für das Ver- und das Entschlüsseln zu verwenden. Somit wären die Schlüssel 5 und 6 identisch und/oder die Schlüssel 13 und 14. Es gäbe somit jeweils nur einen Schlüssel zum Ver- und Entschlüsseln.

Bei dem Ausführungsbeispiel gemäß FIG 1 umfasst der Krypto-Koppler 10 eine DRM-Bibliothek 11 (OEM Lib) eines Benutzers, in der der Benutzer der CNC-Steuerung 8, z.B. ein OEM, Zugriffsrechte für seine Kunden, Schlüssel zur Ver- und/oder Entschlüsselung wie den ersten Entschlüsselungsschlüssel KD1 und Daten bezüglich der verwendeten Algorithmen zur Ver- und Entschlüsselung hinterlegen kann. Diese Daten werden in einem Bereich außerhalb des für den Steuerungshersteller besonders sensiblen Bereichs des NCK 9 der CNC 8 abgelegt, z.B. in einem separaten Speicher (nicht dargestellt) oder zumindest einem separaten Speicherbereich (nicht dargestellt).

Weiterhin umfasst bei dem Ausführungsbeispiel gemäß FIG 1 der NCK 9 eine DRM-Bibliothek 16 (DRM) des Steuerungs-Herstellers, in der der Steuerungs-Hersteller Zugriffsrechte für seine Kunden, Schlüssel zur Ver- und/oder Entschlüsselung wie den zweiten Entschlüsselungsschlüssel KD2 und Daten bezüglich der verwendeten Algorithmen zur Ver- und Entschlüsselung hinterlegen kann. Diese Daten werden in dem vor unberechtigten Zugriffen besonders geschützten Bereich des NCK 9 der CNC 8 abgelegt, z.B. in einem speziell dafür vorgesehenen Speicher (nicht dargestellt) oder zumindest einem separaten, vor unberechtigten Zugriff besonders geschützten Speicherbereich (nicht dargestellt) eines Speichers des NCK 9.

Speziell für eine sichere Übertagung der Daten (Programmanweisungen) 3 zwischen dem externen PC 1 und der CNC-Steuerung 8 ist es ferner möglich, dass beide Partner einen nur für diese Verschlüsselung gültigen symmetrischen Schlüssel "aushandeln", ohne diesen kommunizieren zu müssen. Dafür gibt es verschiedene Verfahren. Das populärste ist das ECDH- (Elliptic-curve Diffie-Hellman-) Verfahren. Die Ver- und Entschlüsselung kann dann mit dem temporär gültigen Schlüssel symmetrisch durchgeführt werden. Die Vorteile sind hierbei, dass der symmetrische Schlüssel für jede neue Datenübertragung zwischen den Partnern (neues Teileprogramm, neue Programmanweisung) unterschiedlich sein kann und gleichzeitig der Geschwindigkeitsvorteil der symmetrischen Verschlüsselung erreicht wird. Anders als in FIG 1 dargestellt, muss dann kein Schlüssel zwischen dem PC 1 und der CNC-Steuerung 8 übertragen werden.

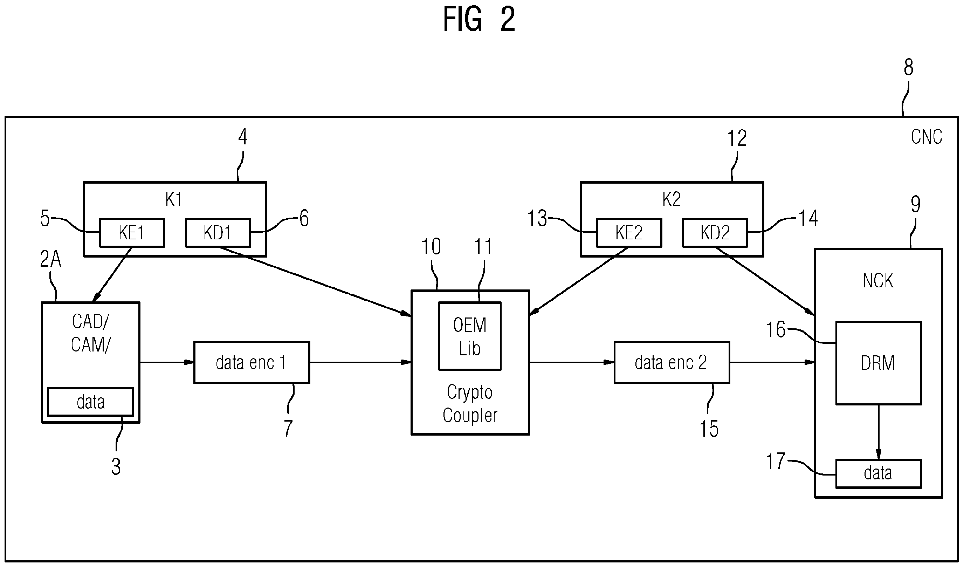

Im Unterschied zu FIG 1 zeigt das Ausführungsbeispiel gemäß FIG 2 eine Ausführungsform der Erfindung, bei der eine CAD/CAM-Funktionalität in Form einer Software-Applikation 2A (CAD/CAM), die sich auch aus mehreren einzelnen Software-Applikationen für die unterschiedlichen Aufgaben zusammensetzen kann, von der CNC-Steuerung 8 umfasst ist. Die zur Herstellung des Werkstücks erforderlichen Programmanweisungen 3 (data) werden hier also direkt auf der CNC-Steuerung 8 erzeugt. Damit entfällt im Unterschied zu dem Ausführungsbeispiel gemäß FIG 1 auch die Notwendigkeit eines Post-Prozessors, da die Programmanweisungen direkt für die konkrete CNC-Steuerung 8 und die damit verbundene Werkzeugmaschine (nicht dargestellt) erzeugt werden.

Bis auf den zuletzt genannten Unterschied und den Wegfall von Datenübertragungen zwischen dem PC 1 und der CNC-Steuerung 8 stimmt die weitere Vorgehensweise bei dem Ausführungsbeispiel gemäß FIG 1 - insbesondere in Bezug auf die Ver- und Entschlüsselung - weitgehend mit dem Vorgehen gemäß FIG 1 überein, was sich auch in denselben Bezugszeichen widerspiegelt. Eine ausführliche Beschreibung der einzelnen Komponenten und Funktionen erübrigt sich daher.

Ergänzend sei noch angemerkt, dass die Kette von der Erzeugung der Programmanweisungen 3 mittels der Software-Applikation 2 bzw. 2A bis zu deren Bereitstellung als zweite entschlüsselte Programmanweisungen 17 in dem NCK entweder insgesamt oder zumindest in Teilbereichen in Form eines kontinuierlichen Datenstroms realisiert werden kann. Das heißt, die Erzeugung, Verschlüsselung, Entschlüsselung, erneute Verschlüsselung und erneute Entschlüsselung kann in Form einzelner Programmanweisungen oder in Form von Blöcken von Programmanweisungen erfolgen. Auf die Zwischenspeicherung kompletter Programme (Teileprogramme) kann damit verzichtet werden.

Alternativ kann jedoch auch an einer oder mehreren Stellen der aufgezeigten Kette ein komplettes Programm-File (Teileprogramm) erzeugt und gespeichert werden. Beispielsweise könnten so die zweiten verschlüsselten Programmanweisungen 15 (data enc 2) zunächst als komplettes Teileprogramm erzeugt und zwischengespeichert werden. Erst wenn dieses Teileprogramm vollständig (in verschlüsselter Form) vorliegt, wird mit dessen Abarbeitung durch den NCK 9 begonnen.

Das verschlüsselte Teileprogramm kann zur Abarbeitung vollständig in einem Schritt entschlüsselt werden, so dass alle in dem Teileprogramm enthaltenen Programmanweisungen in Form der zweiten entschlüsselten Programmanweisungen 17 gleichzeitig (in entschlüsselter Form) vorliegen. Die zweiten entschlüsselten Programmanweisungen 17 können jedoch auch satz- oder blockweise aus dem verschlüsselten Teileprogramm erzeugt werden, und zwar zumindest im Wesentlichen in einem Zeitraum bzw. mit einer Geschwindigkeit, in dem bzw. mit der sie auch durch die CNC-Steuerung 8 abgearbeitet werden können.

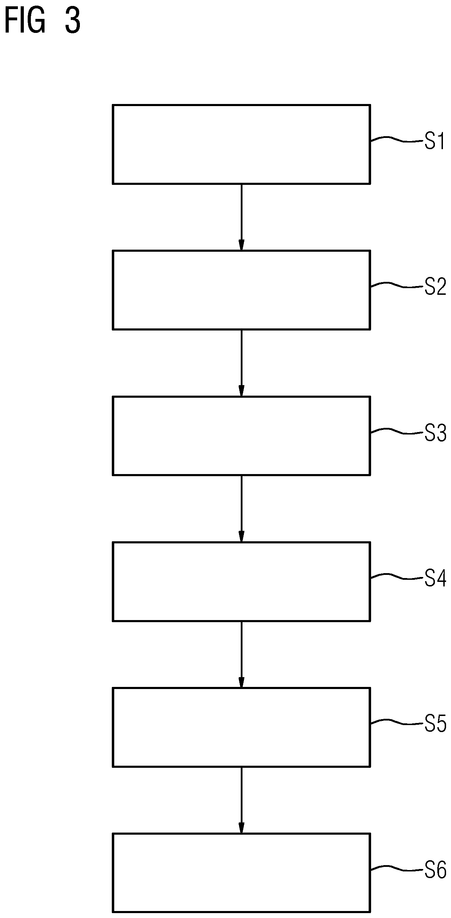

FIG 3 veranschaulicht die wesentlichen Verfahrensschritte bei der Durchführung eines erfindungsgemäßen Verfahrens in Form eines Ablaufdiagramms.

In einem ersten Verfahrensschritt S1 werden eine CAD-Software, eine CAM-Software und eine Post-Prozessor-Software bereitgestellt, für den Fall, dass Programmanweisungen zur Fertigung eines Werkstücks mittels einer Fertigungsmaschine außerhalb einer numerischen Steuereinrichtung, insbesondere einer CNC-Steuerung, zur Steuerung der Werkzeugmaschine erzeugt werden sollen. Die genannten Software-Applikationen werden auf einem oder mehreren Rechnern bereitgestellt.

Für den Fall, dass die Programmanweisungen mittels der numerischen Steuerung erzeugt werden sollen, werden lediglich eine CAD-Software und eine CAM-Software auf der numerischen Steuereinrichtung bereitgestellt.

Mittels der CAD-Software, der CAM-Software und ggf. der Post-Prozessor-Software werden in Abhängigkeit von Werkstückdaten des zu fertigenden Werkstücks Programmanweisungen für die numerische Steuereinrichtung erzeugt, die zur Herstellung des Werkstücks mittels einer mit der numerischen Steuereinrichtung verbundenen Fertigungsmaschine, insbesondere einer Werkzeugmaschine, geeignet sind.

In einem zweiten Verfahrensschritt S2 werden die erzeugten Programmanweisungen mittels eines ersten Verschlüsselungsschlüssel verschlüsselt und somit erste verschlüsselte Programmanweisungen erzeugt.

In einem optionalen Verfahrensschritt S3 werden die ersten verschlüsselten Programmanweisungen von einem (in Bezug auf die numerische Steuereinrichtung) externen Rechner auf die numerische Steuereinrichtung übertragen für den Anwendungsfall, dass die ersten verschlüsselten Programmanweisungen nicht auf der numerischen Steuereinrichtung erzeugt wurden.

Wurden die ersten verschlüsselten Programmanweisungen hingegen bereits auf der numerischen Steuereinrichtung erzeugt, die für die Herstellung des Werkstücks vorgesehen ist, so entfällt der Verfahrensschritt S3 und es erfolgt ein direkter Übergang von Verfahrensschritt S2 zu Verfahrensschritt S4.

In einem Verfahrensschritt S4 werden die ersten verschlüsselten Programmanweisungen mittels eines ersten Entschlüsselungsschlüssel entschlüsselt und unmittelbar im Anschluss daran mittels eines zweiten Verschlüsselungsschlüssels erneut verschlüsselt zum Erzeugen zweiter verschlüsselter Programmanweisungen.

Vorzugsweise erfolgt die Entschlüsselung der ersten verschlüsselten Programmanweisungen dabei lediglich unter Verwendung eines flüchtigen und insbesondere für einen Benutzer nicht zugänglichen Speichers der numerischen Steuereinrichtung.

Vorteilhaft stellt ein Benutzer der numerischen Steuereinrichtung, z.B. ein OEM, die zum Ver- und Entschlüsseln der ersten verschlüsselten Programmanweisungen notwendigen Schlüssel und kryptografischen Applikationen zur Verfügung, insbesondere in einer eigens dafür eingerichteten OEM-Bibliothek.

In einem Verfahrensschritt S5 werden die zweiten verschlüsselten Programmanweisungen unter Verwendung eines zweiten Entschlüsselungsschlüssels entschlüsselt zum Erzeugen zweiter entschlüsselter Programmanweisungen. Dieser Vorgang erfolgt vorzugsweise innerhalb eines, insbesondere vor äußeren Zugriffen besonders geschützten, NCK der numerischen Steuerung.

Vorteilhaft stellt der Hersteller der numerischen Steuereinrichtung die zum Ver- und Entschlüsseln der zweiten verschlüsselten Programmanweisungen notwendigen Schlüssel und kryptografischen Applikationen zur Verfügung, insbesondere in einer eigens dafür eingerichteten DRM-Bibliothek.

Schließlich werden die so in dem NCK vorliegenden, zweiten entschlüsselten Programmanweisungen in einem Verfahrensschritt S6 von dem NCK abgearbeitet, wodurch insbesondere ein Werkzeug der Fertigungsmaschine in einer durch die CAM-Software festgelegten Weise relativ zu dem Werkstück bewegt wird.

Zusammenfassend bietet die Erfindung den Vorteil, dass beliebige Verschlüsselungsmechanismen des OEM-Kunden über den Krypto-Koppler an eine numerische Steuereinrichtung angebunden werden können. Jeder OEM kann so seine eigenen Verfahren, Formate und Schlüssel definieren. Dies muss er dann gegenüber dem Krypto-Koppler durch die OEM-Bibliothek preisgeben. Dadurch gelingt eine Anbindung an die numerische Steuereinheit, wobei der Schutz der Programmanweisungen nicht verletzt wird.

## Patentansprüche

1. Verfahren zum Betrieb einer numerischen Steuereinrichtung zum Steuern einer Fertigungsmaschine zur Fertigung eines Werkstücks mit folgenden Schritten:
- Bereitstellen von Werkstückdaten,
- Bereitstellen einer CAM-Software,
- Erzeugen von Programmanweisungen (3) zur Fertigung des Werkstücks mittels der Fertigungsmaschine, wobei die Programmanweisungen (3) mittels der CAM-Software oder mittels einer der CAM-Software nachgeordneten Post-Prozessor-Software in Abhängigkeit der Werkstückdaten erzeugt werden,
- Verschlüsseln der Programmanweisungen (3) mit einem ersten Verschlüsselungsschlüssel (5) zum Erzeugen erster verschlüsselter Programmanweisungen (7),
- Entschlüsseln der ersten verschlüsselten Programmanweisungen (7) mit einem ersten Entschlüsselungsschlüssel (6) durch die numerische Steuereinrichtung zum Erzeugen erster entschlüsselter Programmanweisungen,
- Verschlüsseln der entschlüsselten Programmanweisungen mit einem zweiten Verschlüsselungsschlüssel (13) zum Erzeugen zweiter verschlüsselter Programmanweisungen (15) und Speichern der zweiten verschlüsselten Programmanweisungen (15) in einem Speicher der numerischen Steuereinrichtung,
- Auslesen der zweiten verschlüsselten Programmanweisungen (15) aus dem Speicher, entschlüsseln der zweiten verschlüsselten Programmanweisungen (15) zum Erzeugen zweiter entschlüsselter Programmanweisungen (17) und abarbeiten der zweiten entschlüsselten Programmanweisungen (17) durch die numerische Steuereinrichtung zur Steuerung der Fertigungsmaschine zur Fertigung des Werkstücks.

2. Verfahren nach Anspruch 1, wobei die Programmanweisungen (3) von einer bzgl. der numerischen Steuereinrichtung externen Recheneinrichtung erzeugt, verschlüsselt und auf die numerischen Steuereinrichtung übertragen werden.

3. Verfahren nach Anspruch 1, wobei die CAM-Software in einem Speicher der numerischen Steuereinrichtung gespeichert und von einem Prozessor der numerischen Steuereinrichtung ausgeführt wird.

4. Verfahren nach einem der vorherigen Ansprüche, wobei der erste Verschlüsselungsschlüssel mit dem ersten Entschlüsselungsschlüssel und/oder der zweite Verschlüsselungsschlüssel mit dem zweiten Entschlüsselungsschlüssel übereinstimmt.

5. Verfahren nach einem der vorherigen Ansprüche, wobei sich der erste Verschlüsselungsschlüssel (5) von dem ersten Entschlüsselungsschlüssel (6) und/oder der zweite Verschlüsselungsschlüssel (13) von dem zweiten Entschlüsselungsschlüssel (14) unterscheidet.

6. Verfahren nach einem der vorherigen Ansprüche, wobei die Programmanweisungen (3) einzelne Sätze oder Blöcke aus mehreren Sätzen eines Teileprogramms zur Fertigung des Werkstücks bilden.

7. Verfahren nach einem der vorherigen Ansprüche, wobei die zweiten verschlüsselten Programmanweisungen (15) zum Erzeugen der zweiten entschlüsselten Programmanweisungen (17) in einem NC-Kern (9) der numerischen Steuereinrichtung entschlüsselt werden.

8. Verfahren nach einem der vorherigen Ansprüche, wobei die ersten verschlüsselten Programmanweisungen (7) mittels des ersten Entschlüsselungsschlüssel (6) entschlüsselt und, insbesondere unmittelbar im Anschluss, mittels des zweiten Verschlüsselungsschlüssels (13) wieder verschlüsselt werden.

9. Verfahren nach einem der vorherigen Ansprüche, wobei die zweiten verschlüsselten Programmanweisungen (15) entschlüsselt und dabei lediglich in einem flüchtigen Speicher der numerischen Steuereinrichtung, insbesondere eines flüchtigen Speichers des NC-Kerns (9) der numerischen Steuereinrichtung, verfügbar gemacht werden.

10. Verfahren nach einem der vorherigen Ansprüche, wobei die Entschlüsselung der zweiten verschlüsselten Programmanweisungen (15) auf eine bestimmte numerischen Steuereinrichtung und/oder eine bestimmte Fertigungsmaschine und/oder für eine bestimmte Lizenz beschränkt ist.

11. Verfahren nach Anspruch 9 oder 10, wobei die numerische Steuereinrichtung, insbesondere der NC-Kern (9), Zugriffsrechte verwaltet und nach einer positiven Prüfung der Zugriffsrechte auf die zweiten verschlüsselten Programmanweisungen (15) zugreift, diese entschlüsselt und abarbeitet.

12. Verfahren nach Anspruch 11, wobei die Zugriffsrechte in einer DRM-Bibliothek (16) in der numerischen Steuereinrichtung, insbesondere im NC-Kern (9) der numerischen Steuereinrichtung, hinterlegt sind.

13. Verfahren nach einem der vorherigen Ansprüche, wobei der erste Verschlüsselungsschlüssel und der erste Entschlüsselungsschlüssel gemeinsam auf Basis eines Diffie-Hellman-Schlüsselaustausches generiert werden.

14. Numerische Steuereinrichtung zur Durchführung eines Verfahrens nach einem der Ansprüche 1 bis 13.

15. Numerische Steuereinrichtung nach Anspruch 14, ausgebildet als CNC-Steuerung (8).

16. Fertigungsmaschinensystem, umfassend eine numerische Steuereinrichtung nach Anspruch 14 oder 15 und eine davon gesteuerte Fertigungsmaschine.

17. Fertigungsmaschinensystem nach Anspruch 16, ausgebildet als Werkzeugmaschinensystem, umfassend eine CNC-Steuerung (8) und eine Werkzeugmaschine.
